(19) **Europäisches Patentamt**
**European Patent Office**
**Office européen des brevets**

(11) **EP 2 609 444 B1**

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(21) Anmeldenummer: **11733882.2**

(22) Anmeldetag: **20.07.2011**

(51) Int Cl.:
*G01R 35/00* *(2006.01)*  *H02P 21/14* *(2006.01)*
*H02P 23/14* *(2006.01)*  *H02P 25/02* *(2006.01)*
*H02P 29/00* *(2006.01)*

(86) Internationale Anmeldenummer:
**PCT/EP2011/062412**

(87) Internationale Veröffentlichungsnummer:
**WO 2012/025312 (01.03.2012 Gazette 2012/09)**

(54) **VERFAHREN UND VORRICHTUNG ZUM STEUERN EINER SYNCHRONMASCHINE**

METHOD AND DEVICE FOR CONTROLLING A SYNCHRONOUS MACHINE

PROCÉDÉ ET DISPOSITIF POUR ASSURER LA COMMANDE D'UN MOTEUR SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2010 DE 102010039766**

(43) Veröffentlichungstag der Anmeldung:
**03.07.2013 Patentblatt 2013/27**

(73) Patentinhaber: **Robert Bosch GmbH**
**70442 Stuttgart (DE)**

(72) Erfinder: **EISENHARDT, Martin**
**71272 Renningen (DE)**

(56) Entgegenhaltungen:
EP-A1- 1 541 869      EP-A2- 2 109 309
DE-A1-102008 054 216  JP-A- 7 212 915
US-A1- 2009 224 702   US-A1- 2009 224 716

**Beschreibung**

GEBIET DER ERFINDUNG

Die Erfindung betrifft ein Verfahren zum Steuern einer Synchronmaschine gemäß dem Oberbegriff von Anspruch 1.

STAND DER TECHNIK

In elektrischen Antrieben für Hybrid- und Elektrofahrzeuge werden heutzutage häufig permanent erregte Synchronmaschinen eingesetzt. Eine solche Synchronmaschine weist einen Rotor, in dem üblicherweise Magnete, die einen magnetischen Fluss erzeugen, angeordnet sind, sowie einen Stator mit Statorwicklungen auf. Die Synchronmaschine kann ein Drehmoment erzeugen, das insbesondere von einem Phasenstrom und von einem magnetischen Fluss in der Maschine abhängt. Das erzeugte Drehmoment kann das Beschleunigungsbzw. Fahrverhalten des Fahrzeuges bestimmen und somit eine wichtige während des Fahrbetriebs zu bestimmende Größe darstellen.

Die Magnete in dem Rotor können relativ temperaturempfindlich sein und können bei Temperaturen, die unter Umständen bereits im normalen Fahrbetrieb des Fahrzeugs erreicht werden, dauerhaft geschädigt werden. Um dies zu verhindern, werden die Phasenströme üblicherweise ab Erreichen einer kritischen Magnettemperatur begrenzt.

Da der Rotor meist ein sich schnell drehendes Bauteil ist, kann die Temperatur der daran angeordneten Magneten allenfalls mit hohem Aufwand direkt gemessen werden. Üblicherweise ist an dem Rotor kein Temperatursensor vorgesehen. Stattdessen wird die Temperatur der Magnete herkömmlicherweise aus der gemessenen Temperatur des Stators abgeschätzt. Bei dieser Abschätzung der Magnettemperatur wird davon ausgegangen, dass der Rotor und die Permanentmagnete etwa die gleiche Temperatur besitzen wie der Stator. Diese Abschätzung ist jedoch besonders bei transienten Vorgängen häufig stark fehlerbehaftet.

Um einen ausreichend hohen Sicherheitsabstand zu einer maximal zulässigen Magnettemperatur einhalten zu können, muss die Temperaturschwelle für die oben genannte Begrenzung des Phasenstroms relativ niedrig gewählt werden, so dass die maximale Leistung der Synchronmaschine nicht vollständig ausgenutzt werden kann.

Die DE 10 2005 062 588 beschreibt ein Verfahren zum Bestimmen der Magnettemperatur einer permanent erregten elektrischen Maschine. Dabei kann die Magnettemperatur durch Messen einer Phasenspannung und einer Drehzahl der elektrischen Maschine bestimmt werden.

Für die Berechnung eines Drehmoments und für die Berechnung einer Rotortemperatur kann eine genaue Kenntnis des magnetischen Flusses notwendig sein. Bei vorbekannten Lösungen kann hierzu der magnetische Fluss anschließend an die Fertigung der Synchronmaschine oder nach einem Wartungsservice der Synchronmaschine bzw. des zum Steuern der Synchronmaschine notwendigen Pulswechselrichters einmalig kalibriert werden. Bei einer solchen Kalibrierung kann ein Kennfeld erzeugt werden, dass in einer Steuerung der Synchronmaschine hinterlegt werden kann und dass einen Zusammenhang zwischen der Rotortemperatur T und der zu messenden Phasenspannung $U_{ind}$ sowie der zu messenden Drehzahl n angeben kann.

Nach einer solchen Kalibrierung und der damit verbundenen Erstellung des Kennfeldes kann später durch Messen der Phasenspannung $U_{ind}$ und der Drehzahl n auf die Rotortemperatur T geschlossen werden und aus dieser Rotortemperatur wiederum der von der Rotortemperatur abhängige magnetische Fluss ermittelt werden.

Für eine Kalibrierung des magnetischen Flusses muss die Temperatur der an dem Rotor angeordneten Magnete bekannt sein, damit Fehler aufgrund von Temperatureinflüssen minimiert werden können. Da jedoch bei Synchronmaschinen typischerweise kein Temperatursensor direkt am Rotor vorgesehen ist, sondern lediglich ein Temperatursensor am Stator vorhanden ist, wird herkömmlich von der Statortemperatur auf die Rotortemperatur und damit auf die Temperatur der Magneten geschlossen. Dabei wird davon ausgegangen, dass ein Wärmeeintrag in den Rotor nur dann stattfindet, wenn auch der Stator signifikant beim Betrieb der Synchronmaschine erwärmt wird. Es wird ferner davon ausgegangen, dass die Rotortemperatur gleich der Statortemperatur ist, wenn der Stator eine bestimmte Temperaturschwelle unterschreitet. Erst dann wird eine Kalibrierung des magnetischen Flusses durchgeführt.

Nachteilig hierbei kann sein, dass erst eine relativ niedrige Temperaturschwelle bezüglich der am Stator gemessenen Temperatur unterschritten sein muss, bevor eine Kalibrierung durchgeführt werden kann. Insbesondere in Ländern mit heißem Klima kann dies problematisch sein.

Die Regelung von Elektromotoren nach erfolgter Kalibrierung ist Gegenstand von EP1541869, US2009224702, US2009224716, EP2109309, JP7212915 und DE102008054216, in denen bestimmte Wartezeiten zur Erhöhung der Genauigkeit empfohlen werden.

OFFENBARUNG DER ERFINDUNG

Es kann daher angestrebt werden, eine Kalibrierung des magnetischen Flusses für Synchronmaschinen in zuverlässiger Weise möglichst unabhängig von einer in der Umgebung herrschenden Temperatur, d.h. insbesondere auch bei höheren Umgebungstemperaturen, durchführen zu können, um die Synchronmaschine über ihren gesamten Leistungsbereich möglichst gut ansteuern zu können.

Dies kann mit dem in Anspruch 1 definierten Verfahren zum Steuern einer Synchronmaschine erreicht werden. Vorteilhafte Ausgestaltungen sind in den abhängigen Ansprüchen angegeben.

Bei der zu steuernden Maschine kann es sich um eine permanent erregte Synchronmaschine handeln, die einen Stator, einen Rotor und mehrere an dem Rotor angeordnete Magnete vorzugsweise in Form von Permanentmagneten aufweist. Die Synchronmaschine wird dabei beispielsweise mit einem Pulswechselrichter derart angesteuert, dass basierend auf einem angenommenen oder vorab ermittelten Wert des von dem Magneten erzeugten magnetischen Flusses ein gewünschtes Drehmoment von der Synchronmaschine erzeugt wird. Um eine Ansteuerung der Synchronmaschine möglichst präzise durchführen zu können, wird ein von den Magneten erzeugter magnetischer Fluss basierend auf einer an dem Stator gemessenen Temperatur kalibriert, sobald dies zuverlässig möglich ist. Erfindungsgemäß wird dieses Kalibrieren erst dann durchgeführt, wenn die Synchronmaschine mindestens eine vorbestimmte Zeitdauer $t_g$ nicht betrieben wurde.

Mit anderen Worten wird eine Kalibrierung des magnetischen Flusses erst dann durchgeführt, wenn beispielsweise eine Abstellzeit $t_a$, die seit dem letzten Betrieb der Synchronmaschine vergangen ist, größer als eine Mindestzeitdauer $t_g$ ist (d.h. $t_a > t_g$). Eine Information über eine solche Abstellzeit ist in Hybridfahrzeugen typischerweise immer verfügbar und wird häufig von einem zentralen Steuergerät mittels eines in einem Fahrzeug vorgesehenen Datenbusses, der auch als Controler Area Network (CAN) bezeichnet wird, über eine CAN-Botschaft anderen Steuergeräten im Fahrzeug-Steuergeräteverbund zur Verfügung gestellt.

Erst wenn eine hinreichend lange Abstellzeit verstrichen ist, wird die Kalibrierung des magnetischen Flusses durchgeführt.

Die mindestens zu erreichende Abstellzeit, das heißt, die vorbestimmte Zeitdauer $t_g$ während der die Synchronmaschine seit ihrem letzten Betrieb nicht mehr betrieben wurde, kann dabei einer Zeitdauer entsprechen, die für einen Temperaturausgleich zwischen dem Stator und dem Rotor benötigt wird. Nach dieser Zeitdauer kann davon ausgegangen werden, dass sich die Temperatur aller Komponenten in der Synchronmaschine angeglichen hat und die Rotortemperatur somit gleich der Statortemperatur ist.

Es kann vorteilhaft sein, bei der Steuerung der Synchronmaschine zu vermerken, ob bereits eine Kalibrierung durchgeführt wurde oder nicht. Hierzu kann in einer Steuerung der Synchronmaschine vor dem Kalibrieren ein Merker gesetzt werden, der angibt, dass der beim Steuern der Synchronmaschine zugrunde gelegte magnetische Fluss einem Nennwert entspricht, das heißt, dass er noch nicht den tatsächlich in der Synchronmaschine herrschenden, messbaren magnetischen Verhältnissen entspricht. Nach dem Kalibrieren kann in der Steuerung der Synchronmaschine ein Merker gesetzt werden, der angibt, dass der beim Steuern der Synchronmaschine zugrunde gelegte magnetische Fluss dem kalibrierten Flusswert entspricht. Aufgrund der gespeicherter Merker kann die Steuerung der Synchronmaschine erkennen, wie präzise und zuverlässig ein Wert für die Rotortemperatur ermittelt werden kann. Bevor eine Kalibrierung durchgeführt werden konnte, kann bei einer solchen Ermittlung lediglich von einem Nennwert ausgegangen werden, so dass die Temperaturermittlung mit einem hohen möglichen Fehler behaftet sein kann und dementsprechend Vorsichtsmaßnahmen beim Betreiben der Synchronmaschine getroffen werden müssen. Nach einer erfolgten Kalibrierung kann dann die Rotortemperatur zuverlässiger ermittelt werden. Daher kann nach einer solchen Kalibrierung die Synchronmaschine über weitere Bereiche ihres Leistungsspektrums präzise angesteuert werden.

Die Kalibrierung des magnetischen Flusses kann unabhängig davon durchgeführt werden, welche Temperatur aktuell in der Synchronmaschine herrscht. Während bei herkömmlichen Steuerungsverfahren eine Kalibrierung nur dann stattfand, wenn die am Stator der Synchronmaschine gemessene Temperatur unter einem vorgegebenen Maximalwert lag, kann nun unabhängig von der tatsächlich herrschenden Temperatur in der Synchronmaschine eine Kalibrierung des magnetischen Flusses auf jeden Fall dann durchgeführt werden, wenn die Synchronmaschine eine ausreichend lange Zeit stillgestanden hat und somit von einem Temperaturausgleich zwischen dem Stator und dem Rotor ausgegangen werden kann. Bei der Kalibrierung kann dann auch bei hohen Statortemperaturen davon ausgegangen werden, dass der Rotor bzw. die Magnete auf der gleichen Temperatur wie der Stator ist und diese Temperatur zuverlässig gemessen werden kann und der Kalibrierung zugrunde gelegt werden kann.

Die Kalibrierung braucht lediglich einmalig nach der Fertigung der Synchronmaschine oder nach einer Wartung der Synchronmaschine durchgeführt werden. Nachdem mit Hilfe der Kalibrierung einmalig ein Kennfeld bzw. eine Kennlinie für die Abhängigkeit des magnetischen Flusses und der Rotortemperatur ermittelt wurde, können diese beim späteren Ansteuern der Synchronmaschine zum Erreichen eines zuverlässigen, effizienten Betriebs verwendet werden.

Es wird angemerkt, dass Gedanken zu der Erfindung hierin im Zusammenhang sowohl mit dem Verfahren als auch mit der Vorrichtung zum Steuern einer Synchronmaschine sowie mit Bezug auf ein mit einer solchen Vorrichtung versehenes Fahrzeug beschrieben sind. Einem Fachmann ist hierbei ersichtlich, dass die einzelnen beschriebenen Merkmale auf verschiedene Weise miteinander kombiniert werden können, um so auch zu anderen Ausgestaltungen der Erfindung zu kommen.

KURZE BESCHREIBUNG DER ZEICHNUNGEN

Ausführungsformen der Erfindung werden nachfolgend mit Bezug auf die beigefügten Zeichnungen beschrieben.

Fig. 1 zeigt eine schematische Darstellung einer permanent erregten Synchronmaschine, die gemäß einer Ausführungsform der vorliegenden Erfindung gesteuert werden kann.

Fig. 2 zeigt ein Flussdiagramm zur Veranschaulichung eines Steuerungsvorgangs einer Synchronmaschine gemäß einer Ausführungsform der vorliegenden Erfindung.

Die Zeichnungen sind lediglich schematisch.

AUSFÜHRUNGSFORMEN DER ERFINDUNG

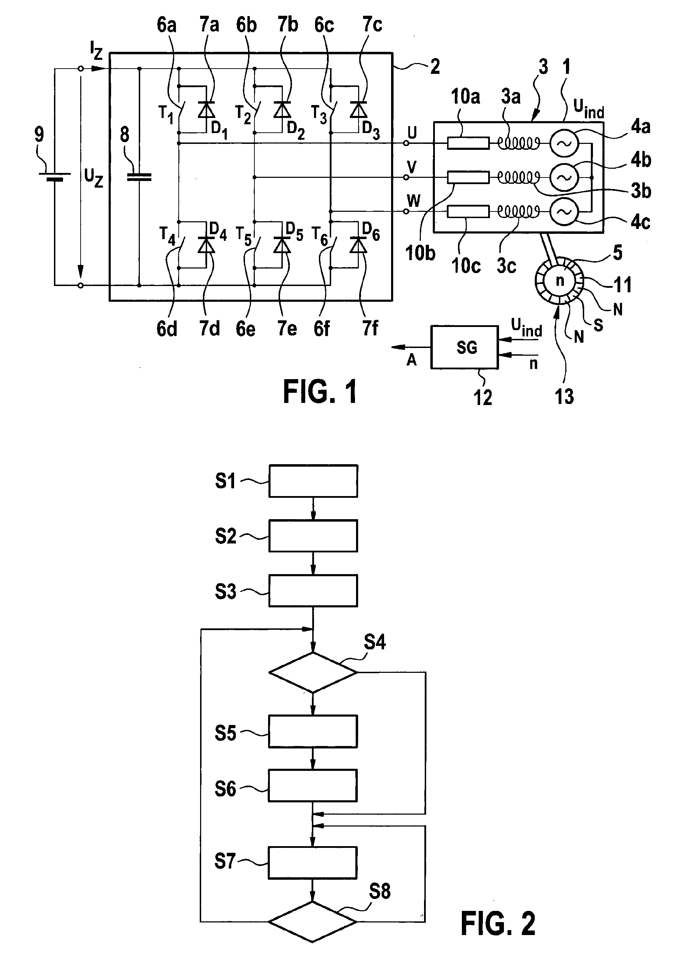

Fig. 1 zeigt eine schematische Darstellung einer permanent erregten Synchronmaschine 1 mit einem Pulswechselrichter (PWR) 2. Der PWR 2 bestimmt Leistung und Betriebsart der Synchronmaschine 1 und wird von einem Steuergerät 12 entsprechend angesteuert. Dadurch kann die Synchronmaschine 1 wahlweise im Motorbetrieb oder im Generatorbetrieb betrieben werden. Im Motorbetrieb erzeugt die Synchronmaschine ein Antriebsmoment, das zum Beispiel während einer Beschleunigungsphase eines Fahrzeugs einen Verbrennungsmotor unterstützen kann. Im Generatorbetrieb wird hingegen mechanische Energie in elektrische Energie umgewandelt und beispielsweise in einem Energiespeicher 9 wie zum Beispiel einer Batterie oder einem Super-Cap gespeichert.

In der dargestellten Figur ist die Synchronmaschine 1 drei-phasig ausgeführt (Phasen U, V, W) und weist einen Stator 3 mit drei Strängen 3a-3c und einen Rotor 13 mit mehreren Permanentmagneten 11 auf. Die Ohmschen Widerstände der Stränge 3a-3c sind mit 10a-10c gekennzeichnet. Die drei Phasen U, V, W der elektrischen Synchronmaschine 1 sind jeweils mit dem Pulswechselrichter 2 verbunden. Der PWR 2 umfasst in bekannter Weise mehrere Schalter 6a-6f, mit denen die einzelnen Phasen U, V, W wahlweise mit einem Zwischenkreis-Potential $U_z$ oder einem Bezugspotential (Masse) verbunden werden können. Der PWR 2 umfasst ferner mehrere Freilaufdioden 7a-7f, die jeweils parallel zu einem der Schalter 6a-6f geschaltet sind.

Um die Temperatur der an dem Rotor 13 vorgesehenen Permanentmagnete 11 zu bestimmen, kann, wie weiter unten genauer beschrieben werden wird, eine Kennlinie oder ein Kennfeld, das in dem Steuergerät 12 hinterlegt werden kann, herangezogen werden. Diese Kennlinie bzw. dieses Kennfeld kann während eines Kalibrierungsvorgangs ermittelt werden. Mit Hilfe der Kennlinie bzw. des Kennfeldes kann die Temperatur T der Permanentmagnete 11 aus dem magnetischen Fluss $\psi$

bestimmt werden, der wiederum von der induzierten Spannung $U_{ind}$ und der Drehzahl n der elektrischen Synchronmaschine 1 abhängt. Dabei gilt:

$$T=f(\psi)=f(n,U_{ind})$$

Die Drehzahl n der elektrischen Synchronmaschine kann mittels eines Drehzahlsensors 5 gemessen werden. Die in den Ständerwicklungen 3a-3c induzierte Spannung ist in der Figur durch Spannungsquellen 4a-4c schematisch dargestellt. Als induzierte Spannung $U_{ind}$ kann beispielsweise die Spannung zwischen zwei der Phasen, zum Beispiel U und V, oder die Spannung zwischen einer der Phasen, U, V, W und einem Bezugspotential, gemessen werden. Diese Spannung ist im Idealfall sinusförmig und wird vorzugsweise im Leerlauf der Maschine gemessen. Im Leerlauf sind dabei alle sechs Leistungsschalter 6a-6f des Pulswechselrichters 2 geöffnet.

Die Spannungs- und Drehzahlsignale $U_{ind}$ bzw. n werden dem Steuergerät 12 an einem Eingang zugeführt. Mit Hilfe eines in dem Steuergerät 12 hinterlegten Algorithmus und basierend auf der Kennlinie bzw. dem Kennfeld werden die Signale verarbeitet und daraus eine aktuelle Temperatur T der Permanentmagnete 11 bestimmt. Bei Überschreiten einer vorgegebenen Temperaturschwelle erzeugt das Steuergerät 12 ein Ausgabesignal A für den Pulswechselrichter 2, mit dem die Leistung der Synchronmaschine 1 begrenzt wird.

Nachfolgend wird ein zum Steuern der Synchronmaschine verwendetes Schema einschließlich einer dabei durchgeführten Kalibrierung mit Bezug auf das in Fig. 2 dargestellte Flussdiagramm beschrieben.

Bei einer Erstinbetriebnahme beispielsweise direkt nach der Fertigung der Synchronmaschine bzw. nach einer Wartung oder einem Service der Synchronmaschine (Schritt S1) wird zunächst ein Nennwert $\psi_{nenn}$ des von dem Permanentmagneten 11 erzeugten magnetischen Flusses eingestellt (Schritt S2). Mit diesem voreingestellten Nennwert $\psi_{nenn}$ des magnetischen Flusses kann die Synchronmaschine grundsätzlich gesteuert bzw. geregelt werden. Allerdings kann dieser Nennwert nicht unbedingt den von den Permanentmagneten 11 tatsächlich in der Synchronmaschine erzeugten magnetischen Fluss wiedergeben, sondern gibt nur einen konservativ angenommenen Wert an, der aufgrund von vorangehender Erfahrung oder durch Simulation oder Berechnung ermittelt worden sein kann. Der tatsächliche herrschende magnetische Fluss ist zu diesem Zeitpunkt noch nicht genauer bekannt. Die auf einem solchen Nennwert basierende Berechnung des Drehmoments und der Temperatur der Rotor-Permanentmagnete 11 kann daher noch mit einem relativ hohen Fehler behaftet sein.

In einer Steuerung, die beispielsweise als in dem Steuergerät 12 hinterlegte Software realisiert sein kann, wird in geeigneter Weise vermerkt, dass eine Kalibrierung des magnetischen Flusses bisher noch nicht durchgeführt wurde. Hierzu kann ein entsprechender Merker gesetzt werden, der angibt, dass der beim Steuern der Synchronmaschine zugrunde gelegte magnetische Fluss lediglich dem Nennwert $\psi_{nenn}$ entspricht (Schritt S3).

Während der nachfolgenden Verwendung der Synchronmaschine wird wiederholt überprüft, ob die Synchronmaschine aktuell betrieben wird oder nicht. Wenn zum Beispiel das mit der Synchronmaschine versehene Fahrzeug aktuell nicht benutzt wird, das heißt, abgestellt ist und ruht, wird dies von einer zentralen Steuereinheit des Fahrzeugs erkannt und über eine CAN-Botschaft unter anderem dem Steuergerät 12 der Synchronmaschine zur Verfügung gestellt. Die Steuerung überprüft nun, ob die Abstellzeit $t_a$, während der die Synchronmaschine nicht betrieben wurde, größer ist als eine vorbestimmte Zeitdauer $t_a$, d.h. ob $t_a > t_g$ (Schritt S4).

Falls dies der Fall ist, wird eine Kalibrierung des magnetischen Flusses durchgeführt (Schritt S5). Dabei wird davon ausgegangen, dass sich die Temperaturen innerhalb der Synchronmaschine aufgrund der langen Zeitdauer seit dem Abstellen der Synchronmaschine ausgleichen konnten, so dass die Temperatur T der Permanentmagnete 11 der Temperatur des Stators entspricht. Diese Temperatur des Stators kann mit Hilfe eines am Stator angeordneten Temperatursensors gemessen werden und einer Kalibrierung, das heißt, einer Erstellung einer Kennlinie bzw. eines Kennfeldes, zugrunde gelegt werden. Die in der Synchronmaschine herrschende Temperatur kann dabei beliebig groß sein. Der gefundene magnetische Fluss $\psi_{kalib}$ wird mit der ermittelten Rotortemperatur temperaturkorrigiert.

Anschließend wird in der Steuerung der Synchronmaschine ein entsprechender Merker gesetzt, der angibt, dass eine Kalibrierung des magnetischen Flusses durchgeführt wurde, so dass der beim Steuern der Synchronmaschine zugrunde zu legende magnetische Fluss dem kalibrierten Flusswert $\psi_{kalib}$ entspricht (Schritt S6).

Falls die in Schritt S4 bestimmte Abstellzeit nicht größer als die vorbestimmte Zeitdauer ist, d.h. $t_a \leq t_g$, werden die Schritte S5 und S6 übersprungen.

Während eines nachfolgenden Normalbetriebes kann die Synchronmaschine derart gesteuert werden, dass basierend auf dem zugrunde gelegten magnetischen Fluss ein gewünschtes Drehmoment erzeugt wird (Schritt S7). Je nachdem, ob der magnetische Fluss bereits kalibriert wurde oder nicht, ist dabei der zugrunde gelegte magnetische Fluss entweder ein Nennwert $\psi_{nenn}$ oder der während der Kalibrierung ermittelte kalibrierte magnetische Fluss $\psi_{kalib}$.

Während des Normalbetriebs wird wiederholt überprüft, ob bereits eine Kalibrierung des magnetischen Flusses durchgeführt wurde (Schritt S8). Falls dies der Fall ist, wird der Normalbetrieb unverändert fortgesetzt (Schritt S7). Falls dies nicht zutrifft, wird erneut geprüft, ob die Abstellzeit größer als die vorbestimmte Zeitdauer ist (Schritt S4) und gegebenenfalls eine Kalibrierung des magnetischen Flusses durchgeführt.

Das beschriebene Verfahren bzw. die beschriebene Vorrichtung zum Steuern einer Synchronmaschine ermöglicht einen effizienten, zuverlässigen Betrieb der Synchronmaschine. Ein Leistungsspektrum der Synchronmaschine kann auch bei erhöhten Temperaturen über weite Bereiche genutzt werden. Eine Kalibrierung des magnetischen Flusses kann auch bei hohen Temperaturen durchgeführt werden.

Die Erfindung kann bei allen permanent erregten Synchronmaschinen eingesetzt werden, wie sie beispielsweise in elektrischen Antrieben von Hybrid- und Elektrofahrzeugen benutzt werden.

**Patentansprüche**

1. Verfahren zum Steuern einer Synchronmaschine (1), die einen Stator (3), einen Rotor (13) und an dem Rotor angeordnete Magnete (11) aufweist, wobei das Verfahren aufweist:

    - Kalibrieren (S5) eines von den Magneten (11) erzeugten magnetischen Flusses $\psi_{kalib}$ basierend auf einer an dem Stator gemessenen Temperatur T,
    - Steuern der Synchronmaschine (1) derart, dass basierend auf dem kalibrierten magnetischen Fluss $\psi_{kalib}$ ein gewünschtes Drehmoment M erzeugt wird,
    **gekennzeichnet durch** die Schritte
    - Einstellen eines Nennwertes $\psi_{nenn}$ (S2) für den in der Synchronmaschine herrschenden magnetischen Fluss nach einer Fertigung oder einer Wartung der Synchronmaschine (S1) und Setzen eines Merkers in einer Steuerung, der angibt, dass noch keine Kalibrierung durchgeführt wurde (S3),
    - wiederholtes Überprüfen, ob die Synchronmaschine mindestens eine vorbestimmte Zeitdauer tg nicht betrieben wurde (S4), wobei die vorbestimmte Zeitdauer $t_g$ einer Zeitdauer entspricht, die für einen Temperaturausgleich zwischen dem Stator (3) und dem Rotor (13) benötigt wird,
    - falls dies zutrifft, Durchführen einer Kalibrierung (S5),
    - Setzen eines Merkers in der Steuerung, der die Durchführung einer Flusskalibrierung angibt (S6),
    - Fortsetzen eines Normalbetriebs (S7), wobei fortwährend überprüft wird, ob bereits eine Flusskalibrierung stattgefunden hat (S8).

2. Verfahren nach Anspruch 1, wobei in einer Steuerung der Synchronmaschine (1) vor dem Kalibrieren ein Merker gesetzt wird, der angibt, dass der beim Steuern der Synchronmaschine zugrunde gelegte magnetische Fluss einem Nennwert $\psi_{nenn}$ entspricht, und wobei in der Steuerung der Synchronmaschine nach dem Kalibrieren ein Merker gesetzt wird, der angibt, dass der beim Steuern der Synchronmaschine zugrunde gelegte magnetische Fluss dem kalibrierten Flusswert $\psi_{kalib}$ entspricht.

3. Verfahren nach einem der Ansprüche 1 bis 2, wobei die Kalibrierung unabhängig davon durchgeführt wird, welche Temperatur T aktuell in der Synchronmaschine (1) herrscht.

4. Verfahren nach einem der Ansprüche 1 bis 3, wobei die Kalibrierung lediglich einmalig nach der Fertigung oder einer Wartung der Synchronmaschine (1) durchgeführt wird.

**Claims**

1. Method for controlling a synchronous machine (1) which has a stator (3), a rotor (13) and magnets (11) arranged on the rotor, wherein the method comprises:

   - calibrating (S5) a magnetic flux $\psi_{cealib}$ generated by the magnets (11), on the basis of a temperature T measured at the stator, and
   - controlling the synchronous machine (1) in such a way that a desired torque M is generated on the basis of the calibrated magnetic flux $\psi_{calib}$, **characterized by** the steps
   - setting a nominal value $\psi_{nom}$ (S2) for the magnetic flux prevailing in the synchronous machine, after manufacture or maintenance of the synchronous machine (S1), and setting a marker in a control means, which marker indicates that calibration has not yet been carried out (S3),
   - repeated checking whether the synchronous machine has not operated (S4) for at least a predetermined time period tg, where in the predetermined time period tg corresponds to a time period which is required for a temperature equalization between the stator (3) and the rotor (13),
   - if this is the case, carrying out calibration (S5),
   - setting a marker in the control means, which marker indicates (S6) that flux calibration is carried out, and
   - continuing normal operation (S7), wherein it is continuously checked whether flux calibration has already taken place (S8).

2. Method according to Claim 1, wherein in a control means of the synchronous machine (1) a marker is set before the calibration, which marker indicates that the magnetic flux which is used as a basis during the control of the synchronous machine corresponds to a nominal value $\psi_{nom}$, and wherein a marker is set in the control means of the synchronous machine after the calibration, which marker indicates that the magnetic flux which is used as a basis during the control of the synchronous machine corresponds to the calibrated flux value $\psi_{calib}$.

3. Method according to one of Claims 1 to 2, wherein the calibration is carried out independently of what temperature T is currently prevailing in the synchronous machine (1).

4. Method according to one of Claims 1 to 3, wherein the calibration is carried out only once after the fabrication or maintenance of the synchronous machine (1).

**Revendications**

1. Procédé de commande d'une machine synchrone (1), laquelle présente un stator (3), un rotor (13) et des aimants (11) disposés sur le rotor, le procédé incluant :

   - calibrage (S5) d'un flux magnétique $\psi_{kalib}$ généré par les aimants (11) sur la base d'une température T mesurée sur le stator,
   - commande de la machine synchrone (1) de manière à générer un couple M souhaité en se basant sur le flux magnétique calibré $\psi_{kalib}$,

   **caractérisé par** les étapes suivantes

   - réglage d'une valeur nominale $\psi_{nenn}$ (S2) pour le flux magnétique régnant dans la machine synchrone après une fabrication ou une opération de maintenance de la machine synchrone (S1) et fixation d'un marqueur dans une commande, lequel indique qu'aucun calibrage n'a encore été effectué (S3),
   - contrôle répétitif si la machine synchrone n'a pas fonctionné pendant au moins une durée prédéfinie tg (S4), la durée prédéfinie tg correspondant à une durée qui est nécessaire pour un équilibrage des températures entre le stator (3) et le rotor (13),
   - le cas échéant, exécution d'un calibrage (S5),
   - fixation d'un marqueur dans la commande, lequel indique l'exécution d'un calibrage du flux (S6),
   - poursuite d'un fonctionnement normal (S7), un contrôle étant effectué continuellement afin de vérifier si un calibrage du flux a déjà eu lieu (S8).

2. Procédé selon la revendication 1, selon lequel un marqueur est fixé dans une commande de la machine synchrone (1) avant le calibrage, lequel indique que le flux magnétique servant de base lors de la commande de la machine synchrone correspond à une valeur nominale $\psi_{nenn}$, et selon lequel un marqueur est fixé dans la commande de la machine synchrone après le calibrage, lequel indique que le flux magnétique servant de base lors de la commande de la machine synchrone correspond à la valeur du flux calibrée $\psi_{kalib}$.

3. Procédé selon l'une des revendications 1 à 2, selon lequel le calibrage est effectué indépendamment de la température T qui règne actuellement dans la machine synchrone (1).

4. Procédé selon l'une des revendications 1 à 3, selon lequel le calibrage n'est effectué qu'une seule fois après la fabrication ou une opération de maintenance de la machine synchrone (S1).

**FIG. 1**

**FIG. 2**

**EP 2 609 444 B1**

**IN DER BESCHREIBUNG AUFGEFÜHRTE DOKUMENTE**

**In der Beschreibung aufgeführte Patentdokumente**

- DE 102005062588
- EP 1541869 A
- US 2009224702 A
- US 2009224716 A
- EP 2109309 A
- JP 7212915 B
- DE 102008054216